# EUROPÄISCHE PATENTANMELDUNG

(11) **EP 2 927 661 A2**
(43) Veröffentlichungstag der Anmeldung: **07.10.2015**
(21) Anmeldenummer: 14001657.7
(22) Anmeldetag: 12.05.2014
(51) Int. Cl.: G01M 7/02, G01M 7/06

(54) **Aktuator**

(30) Priorität: 04.04.2014 EP 14001257
(71) Anmelder: Prisma Engineering Maschinen- und Motorentechnik GmbH, 8041 Graz (AT)
(72) Erfinder: Gschweitl, Ernst, 8200 Gleisdorf (AT)
(74) Vertreter: Grättinger Möhring von Poschinger Patentanwälte Partnerschaft

(57) **Zusammenfassung**

Aktuator zum Erzeugen einer Erregerschwingung für ein Schwingungssystem, insbesondere eines Resonanzprüfstands zur Verprobung der Umlaufbiegung bei rotatorischen Prüflingen, mit wenigstens drei Koppelstäben (12) für die Schwingungsübertragung vom Aktuator auf den Prüfling wobei die Koppelstäbe (12) bezüglich der Drehachse des Prüflings rotationssymmetrisch angeordnet und an den Enden jeweils in oder nahe der Ebene des jeweiligen Verformungsnullpunkts der Schwingung im wesentlichen spielfrei, dreh- und/oder biegeelastisch befestigt sind.

## Beschreibung

Die Erfindung betrifft einen Aktuator zum Erzeugen einer Erregerschwingung für ein Schwingungssystem, insbesondere eines Resonanzprüfstands zur Verprobung der Umlaufbiegung bei rotatorischen Prüflingen.

Bei einer Vorrichtung zur Belastungsprüfung rotatorischer Prüflinge in Form von Radsätzen für Schienenfahrzeuge wurde bereits vorgeschlagen, die von Aktuatoren erzeugte Erregerschwingung mittels Koppelstäben auf den jeweiligen Prüfling zu übertragen. Eine Vorrichtung gemäß diesem Vorschlag ist in der europäischen Patentanmeldung EP 14001257 beschrieben, deren Gegenstand insoweit auch zum Gegenstand vorliegender Patentanmeldung erklärt wird.

Nach dem älteren Vorschlag sind mindestens drei gleichmäßig über einen Kreisumfang um die Drehachse des Prüflings angeordnete Koppelstäbe vorgesehen, die im wesentlichen spielfrei einerseits mit einem Aktuator, andererseits mit dem Prüfling gekoppelt sind. Die Enden der Koppelstäbe sind dabei mittels einer dreh- und biegeelastischen Fügeverbindung derart spielfrei befestigt, dass der Prüfling bevorzugt bei oder nahe seiner Resonanzfrequenz in Schwingungen versetzt wird. Entsprechend der über einen Kreisumfang um die Drehachse des Prüflings gewählten Anordnung der Koppelstäbe wird dabei ein um die feststehende Drehachse des Prüflings entsprechend der Erregerfrequenz umlaufendes Moment ausgeübt.

Der vorliegenden Erfindung liegt die Aufgabe zugrunde, einen Aktuator für einen Resonanzprüfstand zu schaffen, welcher mit minimalen Erregerkräften bei der Erzeugung und der Übertragung der Erregerschwingung auskommt und wobei durch eine geeignete konstruktive Ausgestaltung des Aktuators sowohl die Erzeugung als auch die Weiterleitung der Erregerschwingung auf besonders effektive Weise gewährleistet sind.

Diese Aufgabe wird erfindungsgemäß durch Ausgestaltung eines eingangs genannten Aktuators gemäß Patentanspruch 1 gelöst.

Im Rahmen der erfindungsgemäßen Lösung können drei oder mehr Koppelstäbe oder ein Vielfaches davon vorgesehen sein, die bezüglich der Drehachse des Prüfling rotationssymmetrisch angeordnet sind. Bevorzugt kommen unter dem Gesichtspunkt der technischen und wirtschaftlichen Effizienz vier Koppelstäbe zum Einsatz, die in Umfangsrichtung um 90° zueinander versetzt angeordnet sind.

Um die Ausbildung möglichst reiner Schwingungsformen der Erregerschwingung, beispielsweise als SinusSchwingung zu gewährleisten, sind die Koppelstäbe im Rahmen des Erfindungsvorschlags an ihren Enden jeweils in oder nahe der Ebene des jeweiligen Verformungsnullpunkts der Schwingung befestigt; bei der Ausbildung der Befestigungspunkte ist zu beachten, dass diese aktuatorseitig im wesentlichen als spielfreie, dreh- und/oder biegeelastische Fügeverbindung ausgestaltet sind.

Durch eine derart spielfreie elastische Anbindung der Koppelstäbe werden diese einerseits in Richtung ihrer Längsachse in Art einer Einspannung festgelegt; andererseits bleibt eine begrenzte Verformungsmöglichkeit im Anbindungsbereich erhalten, so dass eine Dämpfung der Erregerschwingung weitgehend unterbleibt bzw. die Erregerschwingung in voller Ausprägung in den jeweiligen Koppelstab eingeleitet und von diesem weitergeleitet wird.

Die erfindungsgemäße Verwendung von Koppelstäben als Übertragungselemente der Erregerschwingung ermöglicht eine gezielte Anordnung ihres Kraftangriffs derart, dass das Schwingungssystem im dynamischen Verformungsnullpunkt des mitschwingenden Anschlussteils, entweder eines Aktuators oder eines Prüflings einwirkt. Da auf diese Weise keine Schwingungsenergie an die Umgebung verloren geht, kann ein mit erfindungsgemäßen Aktuatoren versehener Resonanzprüfstand insgesamt mit kleinen Anregungskräften und geringer Arbeitsenergie auskommen.

Durch die Einstellung der Erregerschwingung auf eine Frequenz bei oder nahe der Resonanzfrequenz des Prüflings ergibt sich ein Vergrößerungsfaktor der übertragenen Schwingungsenergie, wodurch der Apparateaufwand für die Aktuatoren deutlich reduziert werden kann.

Eine vorteilhafte Ausgestaltung des erfindungsgemäßen Aktuators besteht darin, dass er ein auf einer rotierend antreibbaren Erregerwelle mit darauf versetzt angeordneten Exzentermassen gelagertes Aktuatorgehäuse umfasst, derart, dass es mit der rotierenden Erregerwelle ein Schwingungssystem bildet und dass die Befestigungspunkte der Koppelstäbe dem Aktuatorgehäuse zugeordnet sind.

Demnach wird die im Aktuator erzeugte Erregerschwingung auf das Aktuatorgehäuse übertragen und von dort mittels der Befestigungspunkte der Koppelstäbe auf letztere und von diesen weiter auf den Prüfling übertragen. In der Praxis ergeben sich dabei Schwingungsausschläge im Millimeterbereich in axialer Richtung der Koppelstäbe und im *µ*-Meterbereich in radialer Richtung der Koppelstäbe, je nach Ausgestaltung des Aktuators beispielsweise von 3 mm axial und 3 *µ*m radial.

Vorteilhaft trägt die im Inneren des Aktuatorgehäuses befindliche Erregerwelle ein Paar Exzentermassen, die zueinander um 180° versetzt sind. Die Amplitude der Erregerschwingung ist durch die Dimensionierung und Anordnung der Exzentermassen variierbar.

In weiterer Ausgestaltung des erfindungsgemäßen Aktuators ist vorgesehen, dass die Erregerwelle als Hohlwelle ausgebildet und mit einer innenliegenden Antriebsachse drehbar und gegenüber dieser begrenzt beweglich verbunden ist.

Die Übertragung der Drehbewegung von der Antriebsachse auf die Erregerwelle ist nach einem weiteren erfindungsgemäßen Vorschlag vorteilhaft derart ausgestaltet, dass die Enden der Erregerwelle in gegenüberliegenden Stirnwänden des Aktuatorgehäuses gelagert sind und dass die Erregerwelle in der Mitte zwischen ihren Enden über ein kardanisches Gelenk mit der Antriebsachse verbunden ist.

Auf diese Weise gelingt es, die Erregerschwingung in Form umlaufender Erregerkräfte von der Erregerwelle auf das Aktuatorgehäuse zu übertragen.

Erfindungsgemäß ist ferner vorgesehen, dass das Aktuatorgehäuse im wesentlichen zylindrisch geformt ist und dass die Befestigungspunkte der Enden der Koppelstäbe auf der Außenseite des Aktuatorgehäuses in der zur Gehäuselängsachse senkrechten Gehäusemittelebene gleichmäßig über den Gehäuseumfang verteilt sind.

Die Gehäusemittelebene ist dabei so gewählt, dass sie sich in der Mitte zwischen den beiden Exzentermassen und damit im dynamischen Nullpunkt der Erregerwelle befindet.

In weiterer vorteilhafter Ausgestaltung des erfindungsgemäßen Aktuators ist vorgesehen, dass das Aktuatorgehäuse in der Gehäusemittelebene eine umlaufende, nach außen vorspringende Ringkonsole aufweist, auf welcher Befestigungselemente für die Befestigung der zugeordneten Enden der Koppelstäbe vorgesehen sind.

Für die beidseitige Lagerung der Antriebsachse in Lagerböcken des Maschinentischs und für die Lagerung der Erregerwelle in den gegenüberliegenden Stirnseiten des Aktuatorgehäuses sind zweckmäßig axial/radial stützende Wälzlager vorgesehen, wobei die Erregerwelle bevorzugt mittels Pendellagern gelagert ist, um die Übertragung der Erregerkräfte auf das Aktuatorgehäuse möglichst ungehindert zu gewährleisten.

Damit ist ein Schwingungssystem geschaffen, welches aktuatorseitig die Ausbildung und das Abgreifen einer Erregerschwingung in weitgehend ungestörter Ausprägung ermöglicht. Ursächlich hierfür ist das Zusammenwirken mehrerer Gestaltungsmerkmale, welche die Erzeugung der Erregerschwingung maßgeblich beeinflussen. Hierzu zählt zum einen die Antriebsübertragung auf die Erregerwelle, indem diese als Hohlwelle ausgebildet ist und vorteilhaft über ein Kardangelenk mit der Antriebsachse gekoppelt ist, sowie die pendelnde Lagerung des Aktuatorgehäuses auf der Erregerwelle, ferner die Bestückung der Erregerwelle mit Exzentermassen, die bezüglich der Gehäusemittelebene symmetrisch versetzt angeordnet sind, und schließlich die Ausgestaltung der Anbindung der Befestigungspunkte für die zugeordneten Enden der Koppelstäbe in der Gehäusemittelebene auf der Außenseite des Aktuatorgehäuses.

Im Rahmen der Erfindung stehen weitere Ausführungsvarianten zur Verfügung, beispielsweise eine Pleuelgelenkanbindung anstelle des kardanischen Gelenks oder besondere Ausgestaltungen der Befestigungspunkte für die dem Aktuatorgehäuse zugeordneten Enden der Koppelstäbe.

Im Folgenden wird anhand der Zeichnung ein Ausführungsbeispiel der Erfindung beschrieben. Es zeigt
- Fig. 1: einen schematischen Querschnitt gemäß I-I der Fig. 2 durch ein zylindrisches Aktuatorgehäuse,
- Fig. 2: einen schematischen Längsschnitt gemäß II-II der Fig. 1 durch das Aktuatorgehäuse,
- Fig. 3: einen axialen Teilschnitt durch einen Koppelstab im Bereich seines Befestigungsendes gemäß III-III der Fig. 4 und
- Fig. 4: eine Draufsicht auf Fig. 3.

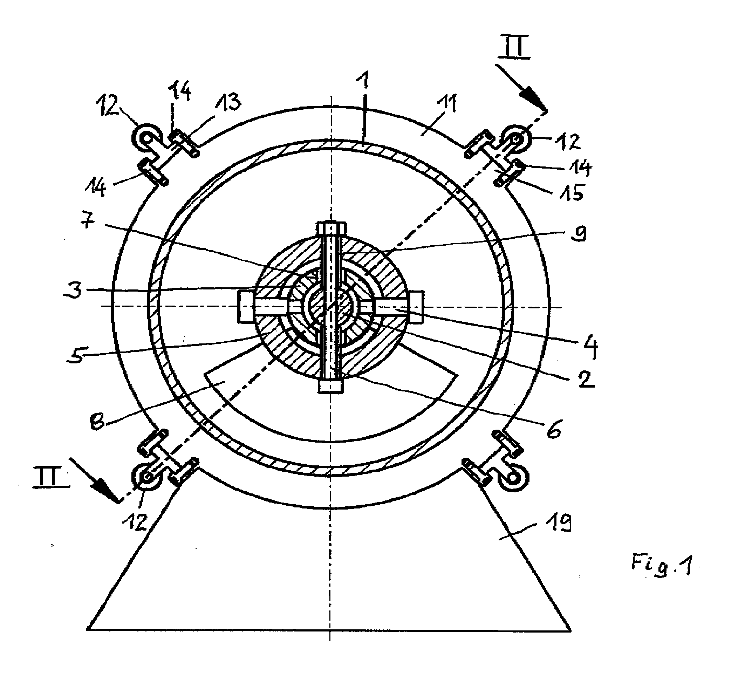

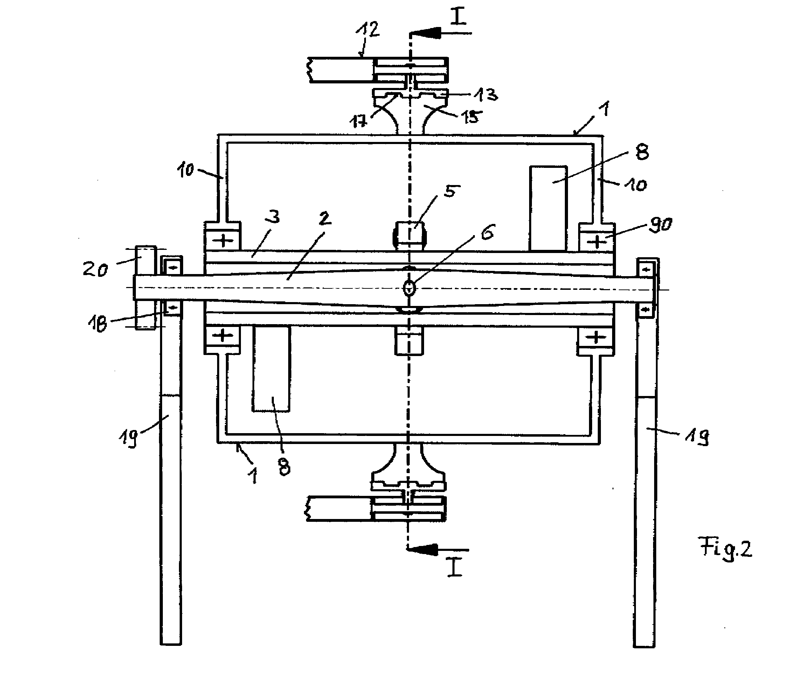

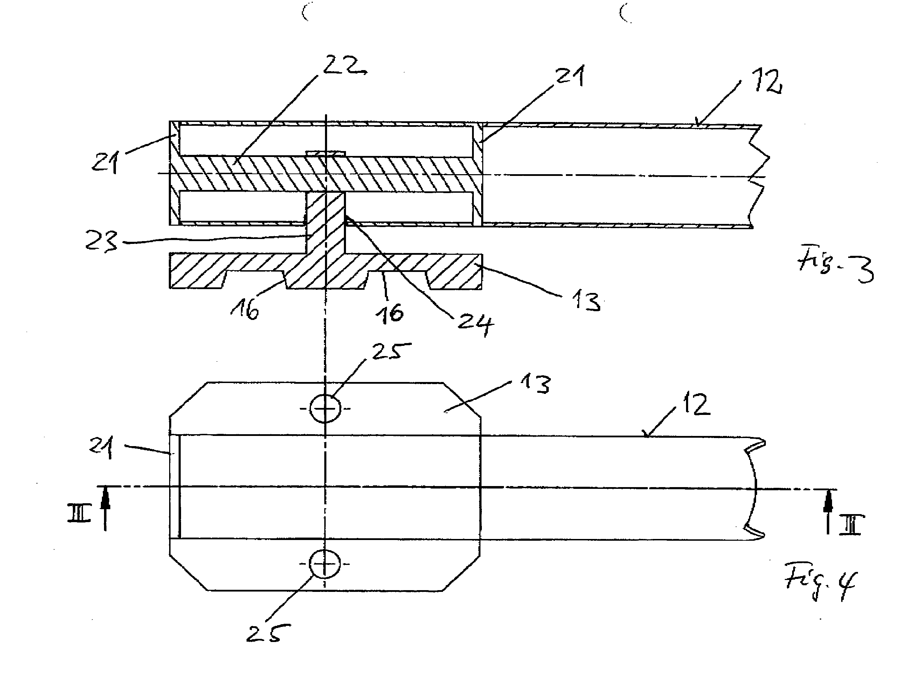

Fig. 1 zeigt einen Aktuator zum Erzeugen einer Erregerschwingung für Schwingungssysteme, vorliegend für die Anwendung bei einem Resonanzprüfstand. In einer schematischen Schnittdarstellung mit einer Schnittebene quer durch seine Längsachse ist ein zylindrisches Aktuatorgehäuse 1 dargestellt. Im Gehäuseinneren ist eine Antriebsachse 2 innerhalb einer als Hohlwelle ausgebildeten Erregerwelle 3 gelagert. Für die Drehmomentübertragung von der Antriebsachse 2 auf die Erregerwelle 3 ist ein kardanisches Gelenk vorgesehen; es besitzt kurze Verbindungsbolzen 4 zwischen einem Gelenkaußenring 5 und der Erregerwelle 3 und einen diagonal durchgehenden Verbindungsbolzen 6 zwischen dem Gelenkaußenring 5 und der Antriebsachse 2. Demzufolge wird das Drehmoment der Antriebsachse 2 über den in einer Lagerhülse 9 im Gelenkaußenring 5 gelagerten diagonalen Verbindungsbolzen 6 übertragen und mittels der kurzen Verbindungsbolzen 4 vom Gelenkaußenring 5 in die Erregerwelle 3 eingeleitet, welche Bohrungen 7 für den freien Durchtritt des diagonalen Verbindungsbolzens 6 aufweist. Mittels des kardanischen Gelenks wird die Rotationsbewegung der Erregerwelle 3, welche außen mit zwei Exzentermassen 8 bestückt ist, behinderungsfrei in die beiderseitigen Lager der Erregerwelle 3 weitergeleitet. Dabei handelt es sich um in Fig. 2 gezeigte Pendellager 90, welche in gegenüberliegenden Stirnseiten 10 des Aktuatorgenäuses 1 angeordnet sind. Auf diese Weise wird sichergestellt, dass die Exzenterkräfte der Erregerwelle 3 in das Aktuatorgehäuse 1 eingeleitet und von diesem weitergeleitet werden können. Dieser Weiterleitung dient eine in der Mittelebene des zylindrischen Aktuatorgehäuses 1 über dessen Außenumfang umlaufende Ringkonsole 11, auf welcher gemäß Fig. 1 vier Befestigungspunkte für die Anlenkung von Koppelstäben 12 gezeichnet sind. Die Befestigungspunkte werden gebildet durch mit den Enden der Koppelstäbe 12 verbundene Fußteile 13, welche mittels Schrauben 14 mit konsolenfesten Stützen 15 fest verbunden sind. Die Fußteile 13 besitzen auf ihrer Befestigungsseite Nuten 16 (vgl. Fig. 3), die mit entsprechenden Rippen 17 (vgl. Fig. 2) der Stützen 15 eine formschlüssige Verbindung bilden.

Fig. 2 zeigt einen Längsschnitt durch das Aktuatorgehäuse in der Ebene II-II gemäß Fig. 1. Die über das Aktuatorgehäuse 1 seitlich vorspringenden Enden der Antriebsachse 2 sind in axial/radial-Wälzlagern 18 in Lagerböcken 19 gelagert. Einseitig ist die Antriebsachse 2 drehfest mit einem Antriebszahnrad 20 verbunden.

Zur Befestigung auf der Ringkonsole 11 des Aktuatorgehäuses 1 sind die zugeordneten Enden der Koppelstäbe 12 in besonderer Weise ausgebildet. Bei dem in den Figuren 3 und 4 gezeigten Ausführungsbeispiel endet die biegesteife Rohrhülse der Koppelstäbe 12 mit einem zwischen Querwänden 21 angeschlossenen Biegestab 22, dessen Länge beispielsweise 20% der Gesamtlänge eines Koppelstabs 12 beträgt. Der Biegestab 22 ist mit Preßsitz mit einem Stützteil 23 des Fußteils 13 fest verbunden, so dass er um diesen Befestigungspunkt spielfrei, aber begrenzt elastisch angeschlossen ist. Dank dieser Elastizität besteht die Möglichkeit der Weiterleitung der Erregerschwingung in den Koppelstab 12 und von diesem über einen weiteren (nicht gezeigten) Befestigungspunkt in den Prüfling des Resonanzprüfstands.

Fig. 3 und 4 zeigen einen derartigen Befestigungspunkt am Ende des Koppelstabs 12 in Verbindung mit dem Aktuatorgehäuse 1. Diese Verbindung ist in Axialrichtung des Koppelstabs 12 unverrückbar, ermöglicht aber eine Bewegungsübertragung im Rahmen des durch die Erregerkräfte erzeugten Schwingungssystems vom Aktuatorgehäuse 1 auf den Koppelstab 12 und über diesen weiter auf den Prüfling.

Da die Rohrhülse des Koppelstabs 12 biegesteif ausgebildet ist, während der Biegestab 22 in Verbindung mit dem Stützteil 23 geringe Kippbewegungen zulässt, verläuft der Stützteil 23 mit geringem Spiel durch eine Durchtrittsöffnung 24 der den Koppelstab 12 bildenden Rohrhülse, wie man in Fig. 3 erkennen kann.

Fig. 4 zeigt den Verbindungspunkt gemäß Fig. 3 in der Draufsicht, nämlich den Koppelstab 12, den Fußteil 13 und die darin vorgesehenen Bohrungen 25 für die in Fig. 1 gezeichneten Schrauben 14 zur Befestigung des Fußteils 13 auf den Stützen 15 der Ringkonsole 11.

## Patentansprüche

1. Aktuator zum Erzeugen einer Erregerschwingung für ein Schwingungssystem, insbesondere eines Resonanzprüfstands zur Verprobung der Umlaufbiegung bei rotatorischen Prüflingen, wobei für die Schwingungsübertragung vom Aktuator auf den Prüfling wenigstens drei Koppelstäbe (12) vorgesehen sind, die bezüglich der Drehachse des Prüfling rotationssymmetrisch angeordnet und an den Enden jeweils in oder nahe der Ebene des jeweiligen Verformungsnullpunkts der Schwingung befestigt sind und wobei deren Befestigungspunkte am Aktuator im wesentlichen als spielfreie, dreh- und/oder biegeelastische Fügeverbindung ausgestaltet sind.

2. Aktuator nach Anspruch 1,
**dadurch gekennzeichnet,**
**dass** er ein auf einer rotierend antreibbaren Erregerwelle (3) mit darauf versetzt angeordneten Exzentermassen (8) gelagertes Aktuatorgehäuse (1) umfasst, derart, dass es mit der rotierenden Erregerwelle (3) ein Schwingungssystem bildet und dass die Befestigungspunkte der Koppelstäbe (12) dem Aktuatorgehäuse (1) zugeordnet sind.

3. Aktuator nach Anspruch 2,
**dadurch gekennzeichnet,**
**dass** wenigstens ein Paar Exzentermassen (8) zueinander um 180° versetzt auf der Erregerwelle (3) angeordnet sind.

4. Aktuator nach Anspruch 2,
**dadurch gekennzeichnet,**
**dass** die Erregerwelle (3) als Hohlwelle ausgebildet und mittels einer innenliegenden Antriebsachse (2) drehbar und gegenüber dieser begrenzt beweglich verbunden ist.

5. Aktuator nach Anspruch 4,
**dadurch gekennzeichnet,**
**dass** die Enden der Erregerwelle (3) in gegenüberliegenden Stirnwänden (10) des Aktuatorgehäuses (1) gelagert sind und dass die Erregerwelle (3) in der Mitte zwischen ihren Enden über ein kardanisches Gelenk mit der Antriebsachse (2) verbunden ist.

6. Aktuator nach Anspruch 4,
**dadurch gekennzeichnet,**
**dass** die Antriebsachse (2) in einem auf einem Maschinentisch befestigten Lagerbock (19) drehbar gelagert ist.

7. Aktuator nach Anspruch 1,
**dadurch gekennzeichnet,**
**dass** das Aktuatorgehäuse (1) im wesentlichen zylindrisch geformt ist und dass die Befestigungspunkte der Enden der Koppelstäbe (12) auf der Außenseite des Aktuatorgehäuses (1) in der zur Gehäuselängsachse senkrechten Gehäusemittelebene gleichmäßig über den Gehäuseumfang verteilt sind.

8. Aktuator nach Anspruch 7,
**dadurch gekennzeichnet,**
**dass** das Aktuatorgehäuse (1) in der Gehäusemittelebene eine umlaufende, nach außen vorspringende Ringkonsole (11) aufweist, auf welcher Befestigungselemente für die Befestigung der zugeordneten Enden der Koppelstäbe (12) vorgesehen sind.

9. Aktuator nach Anspruch 5,
**dadurch gekennzeichnet,**
**dass** die Enden der Erregerwelle (2) mittels Pendellagern (9) in den Stirnwänden (10) des Aktuatorgehäuses (1) gelagert sind.
